# EUROPÄISCHE PATENTSCHRIFT

(11) **EP 2 746 808 B1**
(45) Veröffentlichungstag und Bekanntmachung des Hinweises auf die Patenterteilung: **25.02.2015**
(21) Anmeldenummer: 12197854.8
(22) Anmeldetag: 18.12.2012
(51) Int. Cl.: G01S 7/481, G01S 7/48, G01V 8/00, G02B 26/00, G01S 17/42, G02B 26/10

(54) **Optoelektronischer Sensor zur Erfassung von Objekten**
Opto-electronic sensor for detecting objects
Capteur optoélectronique destiné à la détection d'objets

(43) Veröffentlichungstag der Anmeldung: 25.06.2014
(73) Patentinhaber: SICK AG, 79183 Waldkirch (DE)
(72) Erfinder: Gehring, Roland, 79215 Elzach (DE); Nübling, Ralf Ulrich, 79211 Denzlingen (DE); Pastor, Sebastian, 79194 Gundelfingen (DE)
(74) Vertreter: Hehl, Ulrich

(56) Entgegenhaltungen:
- EP-A2- 1 965 225
- DE-A1-102012 102 244
- US-A- 5 689 328

## Beschreibung

Die Erfindung betrifft einen optoelektronischen Sensor und ein Verfahren zur Erfassung von Objekten nach dem Oberbegriff von Anspruch 1 beziehungsweise 14.

Scanner werden für vielfältige Überwachungs- und Vermessungsaufgaben verwendet. Dazu tastet ein Abtast- oder Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Bekannte Laserscanner weisen einen Drehspiegel oder ein Polygonrad auf, um periodisch eine Überwachungsebene oder ein Segment einer Überwachungsebene abzutasten. Viele Anwendungen erfordern aber die Abtastung eines dreidimensionalen Raumbereichs und nicht lediglich einer Fläche. Ein herkömmlicher Ausweg besteht darin, für eine Relativbewegung zwischen Laserscanner und Objekt zu sorgen, wie beispielsweise in der DE 197 41 730 B4. Dies erfordert erheblichen Aufwand, und zahlreiche Anwendungen eignen sich gar nicht für eine solche kontrollierte Relativbewegung.

Um eine Bewegung des Laserscanners gegenüber dem zu vermessenden Objekt zu vermeiden, werden Laserscanner zu einem 3D-Scanner weitergebildet. In der DE 10 2008 032 216 A1 beispielsweise wird die gesamte Scaneinheit samt Sender, Empfänger und Drehspiegel auf einem Ablenkteller angeordnet. Durch Verschwenken des Ablenktellers wird dann die Scanebene variiert, um so insgesamt einen dreidimensionalen Raumbereich zu überwachen. Dies erfordert aber erheblichen Zusatzaufwand für den Ablenkteller und den zusätzlichen Verschwenkantrieb.

Eine Mehrebenenabtastung als Schritt in Richtung eines 3D-Scanners kann auch erreicht werden, indem Rasterspiegel mit unterschiedlich geneigten Facetten als Ablenkeinheit verwendet werden. Dadurch entsteht ein Winkelversatz der jeweils zu einer Facette gehörigen Abtastebene. Zugleich wird aber der Scanwinkelbereich der jeweiligen Abtastebene auf den Winkelanteil der Facette von typischerweise weniger als 100° beschränkt. Die EP 1 286 178 A2 überwacht nach einem ganz ähnlichen Prinzip in einem vorderen Winkelbereich von nahezu 180° eine Hauptabtastebene und in einem rückwärtigen Winkelbereich über zwei um wenige Grad verkippte Spiegel zwei weitere Abtastebenen, die auf einen Winkelbereich von 40° beschränkt sind.

Als weiterer Lösungsansatz ist bekannt, eine zusätzliche Ablenkeinheit meist in Form eines Schwingspiegels zu verwenden, der für eine Ablenkung des Scanstrahls in einer zweiten Richtung sorgt. Dadurch kann die Abtastebene verschwenkt werden. Durch die Verwendung zweier Ablenkeinheiten entstehen aber erhöhte Kosten und ein größerer Bauraumbedarf, somit ein hoher optischer und mechanischer Aufwand, zudem mit zusätzlichen Sende- und Empfangssignalverlusten. In einer speziellen Lösung mit zusätzlichem Schwingspiegel gemäß DE 20 2009 012 114 U1 wird der 360°-Abtastbereich eines Drehspiegels aufgeteilt. In einem vorderen Winkelbereich wird in herkömmlicher Weise eine Fläche abgetastet. In einem hinteren Winkelbereich wird der Abtaststrahl mehrfach umgelenkt und fällt dann auf einen Schwingspiegel, der in einer Richtung quer zu der Ablenkrichtung des Drehspiegels verschwenkt wird. Somit wird über den hinteren Winkelbereich ein Raumausschnitt anstelle einer Fläche abgetastet.

Aus der EP 1 965 225 A2 ist eine Laserradarvorrichtung für die dreidimensionale Erfassung von Objekten bekannt. Darin ist eine drehbare Ablenkeinheit vorgesehen, um die Umgebung mit einem Laserstrahl abzutasten. Die Ablenkeinheit kann durch eine Vielzahl vorgeschlagener Mechanismen zusätzlich verkippt werden, um mehr als nur eine Abtastebene zu erfassen. In einer Ausführungsform ist sind dazu zwei radial um 180 ° gegeneinander versetzt von der Ablenkeinheit nach außen stehende Drehglieder mit Rollen vorgesehen, die in einem Hohlprofil eines Führungspfads laufen. Dadurch wird der Drehbewegung eine Kippbewegung überlagert, die durch die Geometrie des Führungspfades erzwungen wird.

Vor diesem Hintergrund ist Aufgabe der Erfindung, die Erweiterung des Überwachungsbereichs eines optoelektronischen Sensors mit einfachen Mitteln zu ermöglichen.

Diese Aufgabe wird durch einen optoelektronischen Sensor und ein Verfahren zur Erfassung von Objekten nach Anspruch 1 beziehungsweise 14 gelöst. Dabei geht die Erfindung von dem Grundgedanken aus, mehr als nur eine Abtastebene durch eine über nur einen Aktor zweidimensional bewegte Ablenkeinheit zu erfassen. Die über die Drehachse eines herkömmlichen 2D-Scanners definierte Abtastebene wird durch Verkippen variiert. Dadurch kann mit einfachen Mitteln ein Raumbereich überwacht werden, der größer ist als die durch reine Rotation der Ablenkeinheit entstehende Abtast- oder Scanebene.

So entsteht beispielsweise ein Mehrebenenscanner, bei dem die Verkippung über Winkelbereiche konstant gehalten wird, um jeweils der konstanten Verkippung entsprechende Abtastebenen oder Winkelausschnitten davon zu erfassen. Andererseits kann die Verkippung aber auch kontinuierlich variieren, so dass es keine Abtastebene im eigentlichen Sinne mehr gibt, sondern nur noch einen von dem Abtaststrahl durch die Überlagerung der Drehbewegung und der Verkippung erfassten Raumbereich.

Eine Erfassung eines Objekts beinhaltet bei Laserscannern zumeist auch eine Positionsbestimmung durch Messen des Abstands mit einem der einleitend genannten Lichtlaufzeitverfahren, Bestimmen des Drehwinkels der Ablenkeinheit über einen Winkelencoder sowie des Kippwinkels anhand des Drehwinkels und dem bekannten winkelabhängigen Verlauf der Kippbewegung. Dadurch sind Radius und beide Winkel dreidimensionaler Kugelkoordinaten bestimmt.

Die Erfindung hat den Vorteil, dass weder ein zusätzlicher Antrieb noch eine zusätzliche Ablenkeinheit erforderlich ist, um die Abtastebene zu variieren. Dadurch können Herstellkosten, Baugröße, mechanische Anfälligkeit und Stromaufnahme reduziert werden. Die Vorgabe der Verkippung ermöglicht dabei eine Anpassung der Abtastung an die jeweilige Anwendung.

Der Sensor weist bevorzugt eine Zwangsführung auf, welche einen jeweiligen Kippwinkel in Abhängigkeit von der Drehbewegung festlegt. Diese Zwangsführung sorgt dafür, dass sich mit der Drehbewegung auch der gewünschte Kippwinkel einstellt. Dabei gibt die Zwangsführung den gewünschten Kippwinkel vor. Dieser hängt von der Winkelstellung ab, wobei aber die Vorgabe nicht nur auf eine 360°-Drehung begrenzt ist, sondern die Zwangsführung sich über mehrere Drehungen erstrecken und erst dann periodisch wiederholen kann.

Die Zwangsführung weist bevorzugt einen Eingriff zwischen einem mit der Ablenkeinheit verbundenen Führungselement und einer die Drehbewegung der Ablenkeinheit nicht mitvollziehenden Profilbahn auf. Das Führungselement rotiert somit mit der Ablenkeinheit und verkippt diese gemäß der vorgegebenen Profilbahn, die beispielsweise in einer Bodenfläche oder einem seitlichen Gehäuseteil angeordnet und bezüglich der Drehbewegung ruht. Die Profilbahn gibt durch ihre Geometrie die Kippwinkel der Ablenkeinheit und damit den resultierenden Überwachungsbereich über die jeweilige momentane Orientierung der Abtastebene vor. Durch Änderung der Profilbahn können leicht Varianten des Sensors mit angepasstem Überwachungsbereich gebildet werden. Der Eingriff kann alternativ umgekehrt zwischen einer an der Ablenkeinheit angeordneten Profilbahn und einem die Drehbewegung nicht mitvollziehenden Führungselement vorgesehen sein.

Die Ablenkeinheit ist bevorzugt an einem Gelenkpunkt gegenüber dem Eingriff gelagert. An diesem Gelenkpunkt, beispielsweise in Form einer Blattfeder, eines Filmgelenks, eines mit der Ablenkeinheit durch Spritzverfahren hergestellten elastischen Kunststoffelements, eines Gleit-, Kugel- oder Rollenlagers, kann die Ablenkeinheit verkippt werden. Die Lage des Gelenkpunkts gegenüber dem Eingriff bedeutet nicht zwingend diametral in größtem Abstand gegenüber. Da der Weg zwischen Eingriff und Gelenkpunkt den Hebel festlegt, welcher die Verkippung bewirkt, sollte jedoch ein gewisser Mindestabstand eingehalten sein. Dazu genügt aber beispielsweise auch eine verkippbare Aufhängung an der Drehachse statt diametral gegenüber dem Eingriff.

Die Ablenkeinheit ist bevorzugt ein Spiegelrad mit mehreren Facetten, dessen Achse quer, insbesondere senkrecht zu der Drehachse angeordnet ist. Derartige Spiegelräder, beispielsweise ausgebildet als Polygonspiegelrad oder Rasterspiegel, werden herkömmlich mit ihrer Achse in der eigentlichen Drehachse des Sensors und damit senkrecht zu der Abtastebene orientiert, so dass die Facetten mit jeder Drehung nacheinander den Abtaststrahl ablenken. Im Gegensatz dazu wird das Spiegelrad hier quasi hochkant eingesetzt, so dass sich das Spiegelrad hauptsächlich nicht um die eigene Achse, sondern mit seiner Spiegelradebene dreht. So wirkt jeweils eine Facette über einen größeren Winkelbereich wie ein herkömmlicher Drehspiegel. Der Drehbewegung überlagert ist die Verkippung, so dass insgesamt eine Art schräge Drehung resultiert. Jede Facette wirkt als Ablenkeinheit mit zunehmender Verkippung, bis eine andere Facette übernimmt und den Bereich der Kippwinkel erneut durchläuft. Es entsteht eine ruhige, stetige Vorwärtsbewegung einschließlich der Verkippung, die auch anders als einige andere Ausführungsformen keinen unruhigen und für die eigentliche Abtastung nur sehr eingeschränkt nutzbaren Rücklauf für den periodischen Neuanfang der Verkippung benötigt.

Die Facetten weisen bevorzugt unterschiedliche Längen auf und/oder sind gegenüber der Achse unterschiedlich verkippt. Das Spiegelrad ist also in dieser Ausführungsform nicht regelmäßig. Die Facetten dehnen die zwangsgeführte Kippbewegung über unterschiedliche Winkelbereiche oder Drehungen aus oder führen durch einen eigenen gegenseitigen Kippwinkel einen zusätzlichen Versatz ein. Dadurch ergibt sich für jede Facette ein variierender Scanbereich, der sich nicht schon mit jeder neu in den Abtaststrahl hineingeführten Facette, sondern erst nach einem vollständigen Durchlauf über alle Facetten periodisch wiederholt. Alternativ können die Facetten in Umfangsrichtung ein gleichseitiges Polygon beschreiben und mit ihrer jeweiligen kurzen Seite quer zum Umfang senkrecht oder zumindest im untereinander gleichen Winkel zum einfallenden Abtaststrahl stehen. Dann tastet jede Facette den gleichen Überwachungsbereich ab.

Die Ablenkeinheit weist bevorzugt mehrere Führungselemente auf, die einander abwechselnd mit einer Profilbahn in Eingriff stehen. Dadurch wird beispielsweise jede Facette durch jeweils ein zugehöriges Führungselement in der Profilbahn geführt. Das abwechselnde Eingreifen der Führungselemente kann genau abgestimmt sein, d.h. das eine Führungselement verlässt die Profilbahn genau in dem Moment, in dem das nächste Führungselement mit der Profilbahn in Eingriff kommt. Denkbar ist aber auch ein gewisser Überlapp, in dem bisheriges und nächstes Führungselement gleichzeitig in Eingriff mit der Profilbahn stehen, oder umgekehrt ein kurzer Leerlauf, ehe das nächste Führungselement eingreift. Insgesamt entsteht so eine einzige, ununterbrochene und kontinuierliche Zwangsführung ohne Rücklauf oder ähnliche unregelmäßige Abläufe.

Die Profilbahn weist bevorzugt eine Rille und das Führungselement einen in der Rille laufenden Zapfen auf. Beides soll in einem weiten Sinne verstanden werden. Die Rille bestimmt die Profilbahn, auf der sich der Zapfen als beliebig ausgeformtes Führungselement bewegen soll. Das geschieht reibungsarm, denn die erforderliche Kraft für die Zwangsführung bleibt sehr gering. Es muss nur so viel Kraft aufgewandt werden, wie für das Halten der für diese Manipulation durch Zwangsführung ausgelegten Ablenkeinheit im jeweils gewünschten Kippwinkel erforderlich. Dennoch kann die mechanische Beanspruchung beispielsweise durch ein Gleit- oder Rollmittel an dem Zapfen oder geeignete Wahl von stabilen und zugleich reibungsarmen Materialien weiter reduziert werden.

Die Profilbahn weist bevorzugt einen Steg und das Führungselement mindestens eine, insbesondere zwei den Steg umgreifende Führungsrollen auf. Dies ergibt eine besonders leichtgängige Zwangsführung mit geringer mechanischer Beanspruchung. Mindestens eine der Führungsrollen kann angefedert sein, um eine spielfreie Zwangsführung zu erhalten, während die andere Führungsrolle als Gegendruckelement wirkt, damit die Federkraft den Drehantrieb nicht belastet.

Die Profilbahn variiert bevorzugt den Abstand zu der Drehachse in einem Reliefprofil. Während Rillen und Stege das Führungselement parallel zu der Drehachse verschieben, variiert das Reliefprofil den Abstand zu der Drehachse. Durch ein geeignet aufgebautes und angeordnetes Führungselement bewirkt dieses Reliefprofil eine entsprechende Verkippung der Ablenkeinheit. Die Auslenkung über ein Reliefprofil kann mit einem Versatz parallel zu der Drehachse etwa mittels einer Rille oder eines Steges kombiniert werden.

Die Profilbahn weist bevorzugt eine ansteigende Gerade und einen Rücklauf auf. Eine Profilbahn wird an sich wegen der Drehbewegung am besten in Zylinderkoordinaten beschrieben. Hier und im Folgenden werden aber meist zur Veranschaulichung Mantelabwicklungen betrachtet, bei denen die Winkelkoordinate wie eine kartesische Koordinate behandelt wird. Eine ansteigende Gerade entspricht also eigentlich einer Spirale und führt zu einem gleichmäßigen Verkippen mit der Drehbewegung. Eine eigentliche Abtastebene gibt es demnach nicht, vielmehr wird ein Raumbereich spiralförmig abgetastet. Die Steigung kann an einem oder mehreren Punkten verändert werden, um Teilspiralen unterschiedlicher Steigung zu erhalten. Am Ende der Profilbahn wird die Ablenkeinheit über ein vorzugsweise kurzes, steiles und sich dennoch möglichst glatt einfügendes Rücklaufstück an den Anfang der Profilbahn zurückgeführt.

Die Profilbahn weist bevorzugt mehrere durch kurze Anstiege verbundene horizontale Teilabschnitte auf. Jeder Teilabschnitt definiert eine Abtastebene oder einen Winkelausschnitt davon. Über die kurzen Anstiege erfolgt ein Winkelversatz der Abtastebenen. Zusätzlich zu den Anstiegen ist auch hier ein Rücklauf zwischen Ende und Anfang der Profilbahn vorgesehen.

Die Profilbahn weist bevorzugt mindestens eine periodische Schwingung auf. Diese Schwingung sollte zu einer möglichst ruhigen Bewegung führen, wie etwa durch eine Sinuskurve. Denkbar sind auch mehrere verschachtelte Schwingungen als Profilbahn, so dass sich die insgesamt vorgegebene Bewegung der Verkippungen erst nach mehreren Drehungen wiederholt.

Alternativ kann die Profilbahn als Freiform ausgeführt sein, um praktisch beliebige Abtastungen gewünschter Raumbereiche zu erzielen. Dabei sind jegliche Mischformen von Geradenstücken, horizontalen Teilabschnitten, Schwingungen und anderen Kurvenverläufen denkbar. Durch Veränderung der Profilbahn, beispielsweise durch Vorhalten einer Anzahl von Gehäusehauben mit entsprechender Profilbahn, kann somit der abzutastende Raumbereich konfiguriert werden.

Die Profilbahn weist bevorzugt ein Einstellelement auf, um die Profilbahn zu verschieben, zu dehnen oder zu stauchen. Dementsprechend wird der überwachte Raumbereich verschoben, beziehungsweise in der Winkelrichtung der Verkippung engmaschiger oder grober abgetastet. Statt also die Profilbahn insgesamt auszutauschen, was in der Praxis zumeist mit dem Einsatz eines anderen Sensors oder zumindest eines anderen Sensorbauteils einhergeht, wird hier in gewissen Grenzen eine Einstellbarkeit oder Konfiguration der vorhandenen Profilbahn ermöglicht und damit der Sensor flexibler einsetzbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Laserscanners mit Verkippen der Ablenkeinheit durch Eingriff eines Zapfens in einer umlaufenden Rille;
- Fig. 2: eine Schnittdarstellung eines Laserscanners mit Verkippen der Ablenkeinheit durch Eingriff von Führungsrollen an einem umlaufenden Steg;
- Fig. 3a-b: eine Ausschnittsdarstellung eines Laserscanners zur Erläuterung einer Zwangsführung durch ein Reliefprofil;
- Fig. 4a: eine Profilbahn mit zwei ansteigenden Geraden und einem Rücklauf;
- Fig. 4b: eine Profilbahn mit vier ansteigenden Geraden und einem Rücklauf;
- Fig. 4c: eine Profilbahn mit drei unterschiedlich ansteigenden Geraden und einem Rücklauf über eine ganze Drehperiode;
- Fig. 4d: eine Profilbahn mit drei horizontalen Teilabschnitten und einem Rücklauf;
- Fig. 4e: eine Profilbahn mit einer periodischen Schwingung;
- Fig. 4f: eine Profilbahn mit zwei verschachtelten Schwingungen;
- Fig. 5a: eine als Ganzes verschiebbare Profilbahn;
- Fig. 5b: eine dehn- und stauchbare Profilbahn;
- Fig. 6a: eine Ausschnittsdarstellung eines Laserscanners zur Erläuterung eines hochkant stehenden und aufgrund einer Zwangsführung schräg drehenden Spiegelrads als Ablenkeinheit; und
- Fig. 6b: eine Profilbahn zur Zwangsführung des Spiegelrads gemäß Figur 6a.

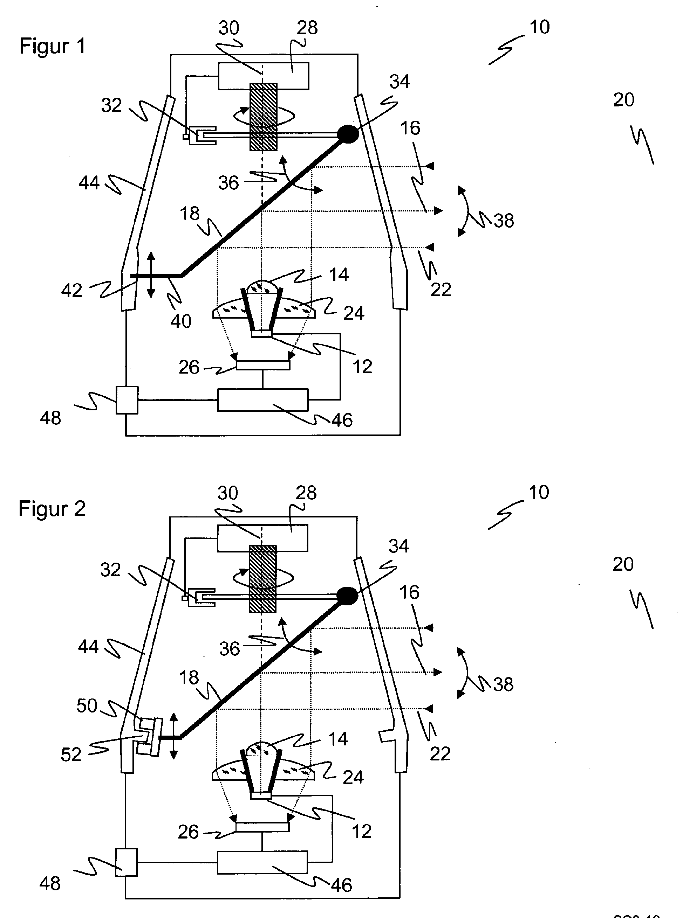

Figur 1 zeigt eine Schnittdarstellung eines Laserscanners 10. Es sind diverse andere Anordnungen der einzelnen Elemente eines optoelektronischen Sensors zur Erfassung von Objekten denkbar und von der Erfindung umfasst. Die Darstellung soll also nur beispielhaft zu verstehen sein.

Ein Lichtsender 12, beispielsweise eine LED oder eine Laserdiode, sendet über eine Sendeoptik 14 einen Sendelichtstrahl oder Abtaststrahl 16 aus, der nach Ablenkung an einer Ablenkeinheit 18 aus dem Laserscanner 10 in einen Überwachungsbereich 20 austritt. Wird von dem Sendelichtstrahl 16 ein Objekt angetastet, so kehrt reflektiertes oder remittiertes Licht 22 zu dem Laserscanner 10 zurück und wird nach erneuter Ablenkung an der Ablenkeinheit 18 von einer Empfangsoptik 24 auf einen Lichtempfänger 26 gebündelt.

Ein Antrieb 28 versetzt die Ablenkeinheit 18 in eine Drehbewegung bezüglich einer Drehachse 30. Die jeweilige Winkelstellung wird von einem Encoder 32 bestimmt. Im Verlauf der Drehbewegung würde der Abtaststrahl 16 bei konstantem Kippwinkel zwischen Ablenkeinheit 18 und Drehachse 30 eine zu der Drehachse 30 senkrechte Abtastebene abtasten.

Die Ablenkeinheit 18 ist aber an einem Gelenkpunkt 34 wie durch einen Pfeil 36 angedeutet verkippbar gelagert, was zu einer durch einen Pfeil 38 angedeuteten Winkelabweichung des Abtaststrahls 16 führt. Somit wird anstelle einer einfachen Abtastebene ein Raumbereich mit einer Abtastkurve erfasst, die von der jeweiligen Verkippung abhängt.

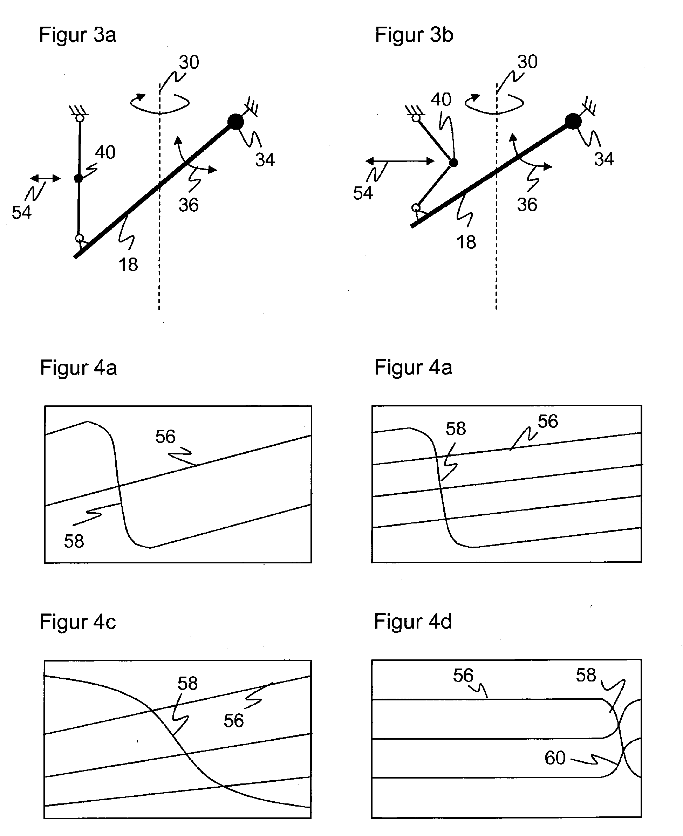

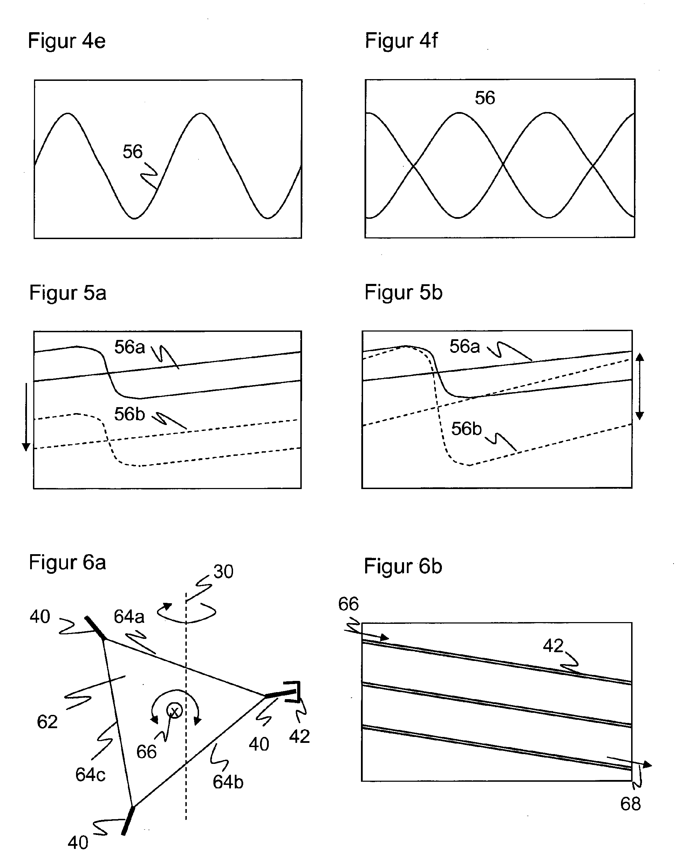

Die Verkippung wird durch einen Eingriff eines Führungszapfens 40 in einer umlaufenden Rille 42 erreicht. Mögliche Verläufe der Rille 42 sind weiter unten mit Bezugnahme auf die Figuren 4 und 5 näher erläutert. Die Rille 42 ändert ihre Höhenlage, gemessen in Richtung der Drehachse 30, mit dem Drehwinkel der Ablenkeinheit 18. Über den Führungszapfen 40 wirkt sich eine Änderung der Höhenlage auf den Neigungs- oder Kippwinkel der Ablenkeinheit 18 in einer durch die Rille 42 vorgegebenen winkelabhängigen Weise aus.

Die Rille 42 kann wie dargestellt in einem als Haube 44 bezeichneten Gehäuseteil vorgesehen sein. Das ermöglicht eine Variation der vorgegebenen Verkippung durch Austausch der Haube 44 gegen eine Haube 44 mit einer anderen Rille 42. Alternativ kann die Rille 42 auch in einem nicht gezeigten Sockelteil in Eingriff mit einem entsprechend nach unten statt nach außen gerichteten Führungszapfen 40 angeordnet sein. Als weitere Alternative ist eine Umkehrung denkbar, bei welcher die Rille 42 mit der Ablenkeinheit 18 mitrotiert und der Führungszapfen am Gehäuse befestigt ist und die Drehung nicht mitvollzieht.

Eine Steuer- und Auswertungseinheit 46 ist mit dem Lichtsender 12 und dem Lichtempfänger 26 verbunden, um den Sendelichtstrahl 16 zu erzeugen und ein aus remittiertem Licht 22 in dem Lichtempfänger 26 erzeugtes Empfangssignal auszuwerten. Bei dieser Auswertung wird festgestellt, ob ein Objekt erfasst wurde. Die Steuer- und Auswertungseinheit 46 steuert außerdem den Antrieb 28 und erhält das Winkelsignal des Encoders 32, wobei entsprechende Verbindungen der besseren Übersicht halber nicht eingezeichnet sind.

Vorzugsweise nimmt die Steuer- und Auswertungseinheit 46 mit der Erfassung der Objekte auch eine Positionsbestimmung vor. Dazu werden die drei Kugelkoordinaten bestimmt. Der Abstand wird mit einem der einleitend genannten Lichtlaufzeitverfahren gemessen. Der erste Winkel bezüglich der Drehbewegung für die Erfassung eines Objekts ist von dem Encoder 32 unmittelbar bekannt. Den zweiten Winkel bestimmt die Steuer- und Auswertungseinheit 46 als den Kippwinkel, den die Rille 42 bei der jeweiligen Winkelstellung der Ablenkeinheit 18 erzeugt. Dazu wird die Geometrie der Rille 42 eingelernt oder parametriert. Dieser Kippwinkel kann einen größeren Abhängigkeitsbereich als 360° haben, sofern sich die Rille 42 über mehrere Umläufe erstreckt. In diesem Fall muss die Steuer- und Auswertungseinheit 46 auch die Anzahl der vollständigen Umdrehungen innerhalb der Rille 42 berücksichtigen. Dabei kann unterstützend über einen Referenzpunkt oder Auslöser (Trigger) erkannt werden, wann der Führungszapfen 40 den entsprechenden Teil der Rille 42 durchläuft. Das gewünschte Ergebnis der Auswertung wird an einem Ausgang 48 bereitgestellt, sei es beispielsweise als binäres Objektfeststellungssignal insbesondere für sicherheitstechnische Anwendungen, als Objektliste mit Koordinaten der Erfassung oder als zwei- beziehungsweise dreidimensionales Rohbild.

Figur 2 zeigt eine Schnittdarstellung einer weiteren Ausführungsform des Laserscanners 10. Wie auch in allen weiteren Figuren bezeichnen gleiche Bezugszeichen die gleichen oder einander entsprechenden Merkmale. Der Unterschied zu dem Laserscanner 10 gemäß Figur 1 besteht in der Art des Eingriffs, welcher die Ablenkeinheit 18 zwangsgeführt im Verlauf der Drehbewegung verkippt. Anstelle eines Führungszapfens 40 in einer Rille 42 ist hier eine kraftlose Führung in Form von Führungsrollen 50 vorgesehen, die einen Steg 52 umgreifen. Ansonsten sind Aufbau und Funktionsprinzip entsprechend dem anhand Figur 1 erläuterten Laserscanner 10 einschließlich möglicher Ausführungsvarianten.

Figur 3 zeigt eine Ausschnittsdarstellung einer weiteren Ausführungsform eines Laserscanners 10. Dabei ist nur die Ablenkeinheit 18 mit ihrer Aufhängung und Zwangsführung dargestellt. Das Führungselement 40 läuft hier nicht in einer Rille 42, welche einen in Richtung der Drehachse 30 bestimmten Höhenversatz bewirkt, sondern auf einem umlaufenden Reliefprofil, das nur durch einen Pfeil 54 angedeutet ist. Das Reliefprofil verschiebt das Führungselement 40 je nach Drehstellung der Ablenkeinheit 18 in unterschiedlichem Maße zu der Drehachse 30 hin nach innen. Die beiden Fälle der Figur 3a und der Figur 3b illustrieren ein nur minimales Anheben der Ablenkeinheit 18 bei geringer Auslenkung des Führungszapfens 40 aufgrund einer geringen Reliefstärke und ein stärkeres Anheben der Ablenkeinheit 18 bei größerer Auslenkung des Führungszapfens 40 aufgrund einer größeren Reliefstärke. Dementsprechend bildet sich das Relief auf den Kippwinkel ab. Ein solches Reliefprofil kann für sich die Kippwinkel vorgeben oder einem Höhenverlauf überlagert werden, wie der Rille 42 in Figur 1 oder dem Steg 52 in Figur 2.

Figur 4 zeigt verschiedene Beispiele von Profilbahnen 56, welche als Rillen 42, Stege 52 und/oder Reliefprofile die von der Drehstellung der Ablenkeinheit 18 abhängigen Kippwinkel vorgeben. Dabei sind die Profilbahnen 56 jeweils als Mantelabwicklungen der Haube 44 gezeigt. Entsprechende Profilbahnen 56 bei Ausführungsformen der Zwangsführung im Sockel statt umlaufend sind analog möglich und werden nicht im Einzelnen dargestellt oder erläutert. Die Profilbahn 56 codiert das Scanmuster in Hardware und kann durch Varianten der Haube 44 verändert werden.

Figur 4a zeigt ein Beispiel einer Profilbahn 56 mit zwei gleichmäßig ansteigenden Geraden und einem Rücklauf 58. Wegen der Darstellung als Mantelabwicklung muss man sich die Profilbahn 56 an den seitlichen Kanten ineinander übergehend vorstellen. Die rechts endende Profilbahn 56 wird also jeweils links auf gleicher Höhe fortgesetzt. Es handelt sich also tatsächlich nicht um mehrere separate Teilstücke, sondern nur eine einzige zusammenhängende Profilbahn 58. Entsprechend der Profilbahn 56 steigt während der Abtastung durch Drehen der Ablenkeinheit 18 und bei Zwangsführung durch die Profilbahn 56 der Kippwinkel gleichmäßig über zwei Drehungen an und wird in dem Rücklauf 58 über einen vergleichsweise kurzen Winkelbereich für die nächste Abtastperiode in die Ausgangsstellung zurückgebracht. In dem überwachten Raumbereich beschreibt der Abtaststrahl 16 eine gleichmäßig ansteigende Spirale, die sich wegen des Rücklaufs 58 nicht ganz über 720° erstreckt.

Figur 4b zeigt ein anderes Beispiel einer Profilbahn 56 mit vier gleichmäßig ansteigenden Geraden und einem Rücklauf 58. Ansonsten unterscheidet sich diese Ausführungsform nicht von Figur 4a.

Bei dem in Figur 4c gezeigten Beispiel weisen drei Geraden untereinander eine unterschiedliche Steigung auf. Damit werden verschiedene Raumbereiche mit unterschiedlicher Auflösung in Kippwinkelrichtung abgetastet. Der Rücklauf 58 wird nicht in den 360°-Bereich von einer der Geraden eingefügt, sondern beansprucht einen eigenen Umlauf der Ablenkeinheit 18. Dadurch können zu schnelle oder gar ruckartige Richtungsänderungen vermieden werden.

In Figur 4d sind jeweils horizontale Teilbereiche vorgesehen. Damit wird ein Mehrebenenscanner erreicht, welcher innerhalb der horizontalen Teilbereiche mehrere Ebenen erfasst, die um einen durch den Abstand der horizontalen Teilbereiche vorgegebenen Winkel gegeneinander verkippt sind. Analog dem auch hier vorgesehenen Rücklauf 58 dienen kurze Anstiegsbereiche 60 zwischen den horizontalen Teilbereichen zum Wechseln von einer Ebene auf die nächste.

Das an 2D-Scanner angelehnte Denkmodell einer lediglich verkippten Abtastebene wird in den Ausführungsformen gemäß Figur 4e-f endgültig verlassen. Stattdessen wird der raumartige Überwachungsbereich 20 mit einem sinusförmigen Muster abgetastet, bei dem Kippwinkel und Drehwinkel ständig gemeinsam variieren. Figur 4e zeigt eine einfache Schwingung, die schon nach einer Umdrehung der Ablenkeinheit 18 vollendet ist, Figur 4f ein Beispiel von hier zwei verschachtelten Schwingungen, die sich über mehrere Umdrehungen erstrecken.

Die Profilbahnen 56 der Figur 4 sind Beispiele und können zu freien Kurven verallgemeinert werden, welche eine oder mehrere der vergleichsweise einfachen gezeigten Geometrien als Grundbaustein enthalten und anders kombiniert oder gänzlich frei definiert werden. Auch der Rücklauf 58 kann auf andere Weise erfolgen, insbesondere wahlweise innerhalb einer Umdrehung der Ablenkeinheit 18 etwa in einem ohnehin ungenutzten hinteren Totbereich des Laserscanners 10 oder in einer eigens dafür vorgesehenen Umdrehung.

Die Profilbahnen 56 werden vorzugsweise durch Austausch gegen eine Haube 44 mit der gewünschten Profilbahn 56 an die Anwendung angepasst. Anstelle einer solchen "harten Rillencodierung" kann auch eine Anpassungsmöglichkeit vorgesehen sein.

Das Prinzip hierzu zeigen Profilbahnen 56 in Figur 5. Diese Profilbahnen 56 können durch Einstellschrauben wie in Figur 5a von einer mit durchgezogenen Linien gezeigten Profilbahn 56a in einer Ausgangslage in eine mit gestrichelten Linien gezeichnete Profilbahn 56b in einer konfigurierten Lage verschoben werden. Gemäß Figur 5b ist zusätzlich oder alternativ eine Reskalierung durch Dehnen oder Stauchen einer Profilbahn 56a in einer Ausgangslage in eine Profilbahn 56b mit gewünschter Ausdehnung in Höhenrichtung denkbar. Dies kann durch Verwendung eines dehnbaren Materials als Untergrund für die Profilbahn 56 erreicht werden.

Figur 6a zeigt eine Ausschnittsdarstellung für eine weitere Ausführungsform des Laserscanners 10. Dabei ist die bisher meist als einfacher Spiegel ausgebildete Ablenkeinheit 18 durch ein Spiegelrad 62 mit zwei, drei oder mehr Facetten 64a-c ersetzt. Anstatt wie für ein Spiegelrad üblich, wird das Spiegelrad 62 nicht mit seiner eigenen Drehachse 66 in der Drehachse 30 des Laserscanners 10, sondern quer und insbesondere senkrecht dazu quasi hochkant eingesetzt. Der Antrieb 28 dreht deshalb das Spiegelrad 62 primär samt der Achslagerung für dessen eigene Drehachse 66 um die Drehachse 30 und damit senkrecht zu dessen eigener Drehachse 66. Aufgrund der erfindungsgemäßen Verkippung in einer Zwangsführung überlagert sich diese primäre Drehung mit einer zweiten Drehung um die eigene Drehachse 66, so dass das Spiegelrad 62 im Endeffekt eine Art schräger Drehung vollzieht. Es ist möglich und zur Vermeidung von Unwuchten oder Fehljustierungen auch vorteilhaft, wenn die Drehachse 66 des Spiegelrads 62 die Drehachse 30 des Laserscanners 10 schneidet, aber nicht zwingend und deshalb in Figur 6a anders dargestellt.

Das Spiegelrad 62 dient also nicht dazu, wie herkömmlich in einem Umlauf mit mehreren Facetten 64a-c einen kleineren Winkelbereich mehrfach abzutasten. Vielmehr fungiert jeweils eine Facette 64a-c wie ein einfacher Spiegel als Ablenkeinheit 18, wird währenddessen aber verkippt und bei Erreichen eines maximalen Kippwinkels von der nächsten Facette 64a-c abgelöst. Die dazu erforderliche Verkippbewegung des Spiegelrads 62 wird durch abwechselnden Eingriff von Führungselementen 40 in eine Rille 42 bewirkt.

Figur 6b zeigt eine Mantelabwicklung der dafür genutzten Rille 42. Sie besteht aus einer durchgehenden Geraden mit stets gleicher Steigung. Pfeile 66 und 68 bezeichnen einen Einlauf und einen Auslauf des jeweils den zwangsführenden Eingriff herstellenden aktiven Führungselements 40. Wenn der aktive Führungszapfen 40 den Auslauf erreicht, kommt der nächste Führungszapfen 40 als dann aktiver Führungszapfen in dem Einlauf in Eingriff mit der Rille 42 und führt so die nachfolgende Facette 64a-c des Spiegelrads 62. Dabei können Ein- und Auslauf genau aufeinander abgestimmt sein und zeitgleich erfolgen. Es ist jedoch auch ein kurzer zeitlicher Überlapp mit zwei eingreifenden Führungszapfen 40 ebenso wie ein kurzer Leerlauf ohne vollständig eingreifenden Führungszapfen 40 denkbar.

Dementsprechend vollzieht das Spiegelrad 62 eine völlig gleichmäßige überlagerte Dreh- und Kippbewegung, die in einer Schrägdrehung resultiert und keines störenden Rücklaufs mit Umkehr der Bewegungsrichtung bedarf. Der Rücklauf ist durch das abwechselnde Eingreifen der Führungselemente 40 ersetzt. Dadurch ergibt sich besonders bei hohen Drehfrequenzen eine ruhigere Bewegung mit weniger Beschleunigungen.

Das Spiegelrad 62 ist gleichmäßig dargestellt. Jede Facette 64a-c tastet somit den gleichen Überwachungsbereich 20 mit dem gleichen Muster ab. Die Facetten 64a-c können aber auch gegeneinander verkippt oder auf andere Weise verändert ausgestaltet werden, so dass je Facette 64a-c versetzte oder unterschiedliche Abtastmuster beziehungsweise Überwachungsbereiche 20 entstehen. Ebenso kann von der völlig gleichmäßigen Rille 42 abgewichen werden, sofern der weniger ruhige Bewegungsablauf des Spiegelrads 62 in Kauf genommen oder kompensiert wird. Prinzipiell kommen dazu beliebige Kurven wie anhand der Figur 4 erläutert in Frage, und ebenso auch Variationen des zwangsführenden Eingriffs, etwa indem die Führungselemente 40 und die Rille 42 durch Führungsrollen 50 und einen Steg 52 ersetzt werden..

## Patentansprüche

1. Optoelektronischer Sensor (10), insbesondere Laserscanner, zur Erfassung von Objekten in einem Überwachungsbereich (20) mit mehr als einer Abtastebene, der einen Lichtsender (12) zum Aussenden eines Lichtstrahls (16), einen Antrieb (28) zum Erzeugen einer Drehbewegung, eine von dem Antrieb (28) um eine Drehachse (30) drehbare Ablenkeinheit (18, 62) zur periodischen Ablenkung des Lichtstrahls (16), einen Lichtempfänger (26) zum Erzeugen eines Empfangssignals aus dem in dem Überwachungsbereich (20) remittierten oder reflektierten Lichtstrahl (22) sowie eine Auswertungseinheit (46) aufweist, welche für die Erfassung der Objekte anhand des Empfangssignals ausgebildet ist, wobei die Ablenkeinheit (18, 62) verkippbar ist, um die Abtastebene zu variieren und der Antrieb (28) die Ablenkeinheit (18, 62) mit der Drehbewegung zugleich mit Hilfe einer Zwangsführung (40, 42, 50, 52) verkippt, welche einen jeweiligen Kippwinkel in Abhängigkeit von der Drehbewegung festlegt,
**dadurch gekennzeichnet,**
**dass** sich die Zwangsführung (40, 42, 50, 52) über mehrere Umläufe erstreckt und erst dann periodisch wiederholt.

2. Sensor (10) nach Anspruch 1,
wobei die Zwangsführung (40, 42, 50, 52, 54) einen Eingriff zwischen einem mit der Ablenkeinheit (18, 62) verbundenen Führungselement (40, 50) und einer die Drehbewegung der Ablenkeinheit (18) nicht mitvollziehenden Profilbahn (40, 50, 54, 56) oder einen Eingriff zwischen einer an der Ablenkeinheit (18, 62) angeordneten Profilbahn (40, 50 54, 56) und einem die Drehbewegung nicht mitvollziehenden Führungselement (40, 50) aufweist.

3. Sensor (10) nach Anspruch 2,
wobei die Ablenkeinheit (18) an einem Gelenkpunkt (34) gegenüber dem Eingriff gelagert ist.

4. Sensor (10) nach einem der vorhergehenden Ansprüche,
wobei die Ablenkeinheit ein Spiegelrad (62) mit mehreren Facetten (64a-c) ist, dessen Achse (66) quer, insbesondere senkrecht zu der Drehachse (30) angeordnet ist.

5. Sensor (10) nach Anspruch 4,
wobei die Facetten (64a-c) unterschiedliche Längen aufweisen und/oder gegenüber der Achse (66) unterschiedlich verkippt sind.

6. Sensor (10) nach Anspruch 4 oder 5,
wobei die Ablenkeinheit (62) mehrere Führungselemente (40) aufweist, die einander abwechselnd mit einer Profilbahn (42, , 52, 54, 56) in Eingriff stehen.

7. Sensor (10) nach einem der Ansprüche 2 bis 6,
wobei die Profilbahn eine Rille (42) und das Führungselement einen in der Rille (42) laufenden Zapfen (40) aufweist.

8. Sensor (10) nach einem der Ansprüche 2 bis 6,
wobei die Profilbahn einen Steg (52) und das Führungselement mindestens eine, insbesondere zwei den Steg (52) umgreifende Führungsrollen (50) aufweist.

9. Sensor (10) nach einem der Ansprüche 2 bis 8,
wobei die Profilbahn den Abstand zu der Drehachse (30) in einem Reliefprofil (54) variiert.

10. Sensor (10) nach einem der Ansprüche 2 bis 9,
wobei die Profilbahn (56) eine ansteigende Gerade und einen Rücklauf (58) aufweist.

11. Sensor (10) nach einem der Ansprüche 2 bis 10,
wobei die Profilbahn (56) mehrere durch kurze Anstiege (60) verbundene horizontale Teilabschnitte aufweist.

12. Sensor (10) nach einem der Ansprüche 2 bis 11,
wobei die Profilbahn (56) mindestens eine periodische Schwingung, insbesondere mindestens eine Sinuskurve aufweist

13. Sensor (10) nach einem der Ansprüche 2 bis 12,
wobei die Profilbahn (56a, 56b) ein Einstellelement aufweist, um die Profilbahn (56a, 56b) zu verschieben, zu dehnen oder zu stauchen.

14. Verfahren zur Erfassung von Objekten in einem Überwachungsbereich (20) mit mehr als einer Abtastebene, wobei ein Lichtstrahl (16) ausgesandt, von einer mittels eines Antriebs (28) in eine Drehbewegung versetzten Ablenkeinheit (18, 62) periodisch abgelenkt und nach Remission oder Reflexion an dem Objekt wieder empfangen wird, um anhand eines dabei erzeugen Empfangssignals Informationen über das angetastete Objekt zu erhalten, wobei die Ablenkeinheit (18, 62) mit Hilfe einer Zwangsführung (40, 42, 50, 52), welche einen jeweiligen Kippwinkel in Abhängigkeit von der Drehbewegung festlegt, von demselben Antrieb (28) zugleich in Drehbewegung versetzt und verkippt wird, um die Abtastebene zu variieren,
**dadurch gekennzeichnet,**
**dass** sich die Zwangsführung (40, 42, 50, 52) über mehrere Umläufe erstreckt und erst dann periodisch wiederholt.

## Claims

1. An optoelectronic sensor (10), in particular a laser scanner, for the detection of objects in a monitored zone (20) having more than one scanning plane, which comprises a light transmitter (12) for the transmission of a light beam (16), a drive (28) for the generation of a rotational movement, a deflection unit (18, 62) rotatable about an axis of rotation (30) by means of the drive (28) for the periodic deflection of the light beam (16), a light receiver (26) for the generation of a received signal from the light beam (22) remitted or reflected from the monitored zone (20), and an evaluation unit (46) which is configured for the detection of the objects on the basis of the received signal, wherein the deflection unit (18, 62) can be tilted in order to vary the scanning plane, and wherein the drive (28) also tilts the deflection unit (18, 62) with the rotational movement by means of a compulsory guidance (40, 42, 50, 52) which determines a respective tilt angle in dependence on the rotational movement,
**characterized in that** the compulsory guidance (40, 42, 50, 52) covers a plurality of rotations and only then repeats periodically.

2. The sensor (10) in accordance with claim 1,
wherein the compulsory guidance (40, 42, 50, 52, 54) has an engagement between a guide element (40, 50) connected to the deflection unit (18, 62) and a sectional track (40, 50, 54, 56) not following the rotational movement of the deflection unit (18) or has an engagement between a sectional track (40, 50, 54, 56) arranged at the deflection unit (18, 62) and a guide element (40, 50) not following the rotational movement.

3. The sensor (10) in accordance with claim 2,
wherein the deflection unit (18) is supported at a joint position (34) opposite to the engagement.

4. The sensor (10) in accordance with any of the preceding claims,
wherein the deflection unit is a mirrored wheel (62) having a plurality of facets (64a-c) whose axis (66) is arranged transverse, in particular orthogonal to the axis of rotation (30).

5. The sensor (10) in accordance with claim 4,
wherein the facets (64a-c) have different lengths and/or are tilted differently with respect to the axis (66).

6. The sensor (10) in accordance with claim 4 or 5,
wherein the deflection unit (62) has a plurality of guide elements (40) which are alternatively in engagement with a sectional track (42, 52, 54, 56).

7. The sensor (10) in accordance with any of claims 2 to 6,
wherein the sectional track has a groove (42) and the guide element has a spigot (40) running in the groove (42).

8. The sensor (10) in accordance with any of claims 2 to 6,
wherein the sectional track has a web (52) and the guide element has at least has one guide roller, in particular two guide rollers gripping around the web (52).

9. The sensor (10) in accordance with any of claims 2 to 8,
wherein the sectional track varies the distance with respect to the axis of rotation (30) in a relief section (54).

10. The sensor (10) in accordance with any of claims 2 to 9,
wherein the sectional track (56) has an ascending straight and a return (58).

11. The sensor (10) in accordance with any of claims 2 to 10,
wherein the sectional track (56) has a plurality of horizontal part sections connected by short ascents (60).

12. The sensor (10) in accordance with any of claims 2 to 11,
wherein the sectional track (56) comprises at least one periodic oscillation, in particular at least one sinusoidal curve.

13. The sensor (10) in accordance with any of claims 2 to 12,
wherein the sectional track (56a, 56b) comprises a setting element in order to displace, to expand or to compress the sectional track (56a, 56b).

14. A method for the detection of objects in a monitored zone (20) having more than one scanning plane, wherein a light beam (16) is transmitted and is periodically deflected by means of a deflection unit (18, 62) set into a rotational movement by means of a drive (28) and is received again following a remission or reflection at the object in order to obtain information on the scanned object on the basis of a received signal generated upon reception, wherein, in order to vary the scanning plane, the deflection unit (18, 62) is set into rotational movement and tilted at the same time by the same drive (28) by means of a compulsory guidance (40, 42, 50, 52) which determines a respective tilt angle in dependence on the rotational movement,
**characterized in that** the compulsory guidance (40, 42, 50, 52) covers a plurality of rotations and only then repeats periodically.

## Revendications

1. Capteur optoélectronique (10), en particulier scanner à laser, pour la détection d'objets dans une zone de surveillance (20) comportant plus d'un plan de palpage, qui comprend un émetteur de lumière (12) pour émettre un rayon lumineux (16), un entraînement (28) pour engendrer un mouvement rotatif, une unité de déflexion (18, 62) mise en rotation par l'entraînement (28) autour d'un axe de rotation (30) pour la déflexion périodique du rayon lumineux (16), un récepteur de lumière (26) pour engendrer un signal de réception à partir du rayon lumineux réémis ou réfléchi (22) vers la zone de surveillance (20), ainsi qu'une unité d'évaluation (46) qui est réalisée pour la détection des objets au moyen du signal de réception, dans lequel l'unité de déflexion (18, 62) est capable d'être basculer afin de faire varier le plan de palpage, et l'entraînement (28) fait basculer l'unité de déflexion (18, 62) avec le mouvement rotatif et simultanément avec l'aide d'un guidage forcé (40, 42, 50, 52) qui définit un angle de basculement respectif en fonction du mouvement rotatif,
**caractérisé en ce que**
le guidage forcé (40, 42, 50, 52) s'étend sur plusieurs révolutions et se répète périodiquement uniquement ensuite.

2. Capteur (10) selon la revendication 1,
dans lequel le guidage forcé (40, 42, 50, 52, 54) comprend un engagement entre un élément de guidage (40, 50) relié à l'unité de déflexion (18, 62) et une piste de profilé (40, 50, 54, 56) qui ne subit pas conjointement le mouvement rotatif de l'unité de déflexion (18), ou bien un engagement entre une piste profilée (40, 50, 54, 56) agencée sur l'unité de déflexion (18, 62), et un élément de guidage (40, 50) qui ne subit pas conjointement le mouvement rotatif.

3. Capteur (10) selon la revendication 2,
dans lequel l'unité de déflexion (18) est montée sur un point d'articulation (34) à l'opposé de l'engagement.

4. Capteur (10) selon l'une des revendications précédentes,
dans lequel l'unité de déflexion est une roue à miroir (62) avec plusieurs facettes (64a-c) dont l'axe (66) est agencé transversalement, en particulier perpendiculairement à l'axe de rotation (30).

5. Capteur (10) selon la revendication 4,
dans lequel les facettes (64a-c) ont des longueurs différentes et/ou sont basculées différemment par rapport à l'axe (66).

6. Capteur (10) selon la revendication 4 ou 5,
dans lequel l'unité de déflexion (62) comprend plusieurs éléments de guidage (14) en engagement alternativement les uns par rapport aux autres avec une piste profilée (42, 52, 54, 56).

7. Capteur (10) selon l'une des revendications 2 à 6,
dans lequel la piste profilée comporte une rainure (42) et l'élément de guidage comporte un téton (40) en déplacement dans la rainure (42).

8. Capteur (10) selon l'une des revendications 2 à 6,
dans lequel la piste profilée comporte une barrette (52) et l'élément de guidage comporte au moins un galet de guidage (50), en particulier deux galets de guidage (50) qui entourent la barrette (52).

9. Capteur (10) selon l'une des revendications 2 à 8,
dans lequel la piste profilée fait varier la distance à l'axe de rotation (30) dans un profil en relief (54).

10. Capteur (10) selon l'une des revendications 2 à 9,
dans lequel la piste profilée (56) comporte une droite montante et un retour (58).

11. Capteur (10) selon l'une des revendications 2 à 10,
dans lequel la piste profilée (56) comporte plusieurs tronçons partiels horizontaux reliés par des courtes montées (60).

12. Capteur (10) selon l'une des revendications 2 à 11,
dans lequel la piste profilée (56) comporte au moins une oscillation périodique, en particulier au moins une courbe sinusoïdale.

13. Capteur (10) selon l'une des revendications 2 à 12,
dans lequel la piste profilée (56a, 56b) comprend un élément de réglage afin de déplacer la piste profilée (56a, 56b), de l'allonger ou de la raccourcir.

14. Procédé pour la détection d'objets dans une zone de surveillance (20) comportant plus d'un plan de palpage, dans lequel on émet un rayon lumineux (16), on le défléchit périodiquement au moyen d'une unité de déflexion (18, 62) mise en un mouvement rotatif au moyen d'un entraînement (28) et on le reçoit un nouveau après réémission ou réflexion sur l'objet, afin d'obtenir au moyen d'un signal de réception ainsi engendré des informations sur l'objet palpé, dans lequel l'unité de déflexion (18, 62) est mise en un mouvement rotatif et simultanément basculée par le même entraînement (28), avec l'aide d'un guidage forcé (40, 42, 50, 52), qui définit un angle de basculement respectif en fonction du mouvement de rotation, afin de faire varier le plan de palpage,
**caractérisé en ce que** le guidage forcé (40, 42, 50, 52) s'étend sur plusieurs révolutions et se répète périodiquement uniquement ensuite.
